# EUROPÄISCHE PATENTANMELDUNG

(11) **EP 1 533 014 A1**
(43) Veröffentlichungstag der Anmeldung: **25.05.2005**
(21) Anmeldenummer: 04104996.6
(22) Anmeldetag: 12.10.2004
(51) Int. Cl.: B01D 35/18

(54) **Flüssigkeitsfilter-Wärmetauscher-System, insbesondere für Kraftfahrzeuge**

(30) Priorität: 22.11.2003 DE 10354689
(71) Anmelder: MANN+HUMMEL GmbH, 71638 Ludwigsburg (DE)
(72) Erfinder: Eder, Roman, 71638, Ludwigsburg (DE); Mack, Klaus, 74239, Hardthausen (DE)

(57) **Zusammenfassung**

Ein Flüssigkeitsfilter-Wärmetauscher-System umfasst einen Flüssigkeitsfilter mit einem Filterelement und einen Wärmetauscher zur Temperierung der zu reinigenden Flüssigkeit, die ausschließlich über den Wärmetauscher in das System eingeleitet bzw. aus diesem abgeführt wird. Der Wärmetauscher besitzt ein vom Filtergehäuse separat ausgebildetes, jedoch mit diesem zu verbindendes Wärmetauschergehäuse.

## Beschreibung

Die Erfindung bezieht sich auf ein Flüssigkeitsfilter-Wärmetauscher-System, insbesondere für Kraftfahrzeuge, nach dem Oberbegriff des Anspruches 1.

Aus der Druckschrift EP 0 874 140 B1 ist eine Kühler-Filter-Anordnung zur Kühlung und Reinigung von Getriebeöl in einem Kraftfahrzeug bekannt, bei der der Kühler und der Filter übereinanderliegend angeordnet und von einem gemeinsamen Gehäuse eingeschlossen sind. Das Gehäuse ist zylindrisch ausgebildet, wobei der Kühler im unteren Bereich des Gehäuses und der Filter oberhalb des Kühlers angeordnet sind. Das zu reinigende Getriebeöl wird über eine axiale Zuleitung am Boden des Gehäuses zunächst in den Kühler eingeleitet, in welchem eine Kühlung durchgeführt wird, und anschließend über eine axiale Öffnung dem Filter zugeführt, welcher ein zylindrisches Ringfilterelement umfasst, das radial von außen nach innen von dem zu reinigenden Öl durchströmt wird. Nach der Reinigung fließt das Öl über einen axialen, zentralen Ablauf aus dem Gehäuse der Anordnung ab.

Der Kühler und der Filter bilden bei dieser Anordnung eine übereinanderliegende Einheit, die sich durch ein kompaktes Baumaß auszeichnet. Die Befestigung der Anordnung an einem Bauteil des Kraftfahrzeugs muss über zusätzliche Befestigungseinrichtungen auf der Außenseite des Gehäuses erfolgen. Die Befestigungseinrichtungen müssen konstruktiv entsprechend ausgebildet sein bzw. an das Bauteil angepasst werden, mit dem die Kühler-Filter-Anordnung verbunden werden soll.

Der Erfindung liegt das Problem zugrunde, ein Flüssigkeitsfilter-Wärmetauscher-System mit geringem konstruktiven Aufwand variabel einsetzbar zu gestalten.

Dieses Problem wird erfindungsgemäß mit den Merkmalen des Anspruches 1 gelöst. Die Unteransprüche geben zweckmäßige Weiterbildungen an.

Das erfindungsgemäße Flüssigkeitsfilter-Wärmetauscher-System, welches bevorzugt für Kraftfahrzeuge eingesetzt wird, insbesondere zur Ölfilterung und Kühlung in Kraftfahrzeugen, weist jeweils ein Gehäuse für den Flüssigkeitsfilter und für den Wärmetauscher auf. Das Wärmetauschergehäuse ist mit dem Filtergehäuse zu verbinden, wobei die zu reinigende und zu temperierende Flüssigkeit ausschließlich über den Wärmetauscher in das Gesamtsystem eingeleitet und ausschließlich über den Wärmetauscher wieder aus dem Gesamtsystem abgeführt wird. Hierfür ist ein Zulaufkanal im Wärmetauschergehäuse mit einer Eintrittsöffnung im Filtergehäuse verbunden, so dass die zunächst dem Wärmetauscher zugeführte und dort temperierte Flüssigkeit zur Reinigung in die Rohseite im Flüssigkeitsfilter eingeleitet werden kann. Auf der Reinseite des Flüssigkeitsfilters ist die Austrittsöffnung im Filtergehäuse mit einem Ablaufkanal im Wärmetauschergehäuse verbunden, über den die gereinigte Flüssigkeit aus dem Flüssigkeitsfilter-Wärmetauscher-System abgeführt wird.

Die Aufteilung in zwei separate Gehäuse, jeweils eines für den Flüssigkeitsfilter und für den Wärmetauscher, bietet den Vorteil erhöhter Flexibilität, insbesondere im Hinblick auf die konstruktive Anpassung für die jeweilige Einbausituation. So ist es beispielsweise möglich, genormte Wärmetauscher zu verwenden, an die unterschiedliche Flüssigkeitsfilter angedockt werden. In entsprechender Weise können auch unterschiedliche Wärmetauscher mit genormten Flüssigkeitsfiltern kombiniert werden. Auf diese Weise ist eine optimale Anpassung sowohl an die konstruktiven Gegebenheiten als auch im Hinblick auf die geforderte Kühlleistung und Reinigungsleistung des Flüssigkeitsfilter-Wärmetauscher-Systems möglich.

Gemäß einer bevorzugten Ausführung ist eine Seite des Wärmetauschergehäuses mit einer Grundplatte verbunden, über die das Flüssigkeitsfilter-Wärmetauscher-System an ein weiteres Bauteil gekoppelt werden kann, insbesondere mit einem Bauteil eines Fahrzeuges zu verbinden ist. An der Grundplatte können Stützen zur Abstützung am Filtergehäuse vorgesehen sein, wobei die Stützen über Schrauben mit dem Filtergehäuse verbunden werden können. Das zwischen Grundplatte und Filtergehäuse angeordnete Wärmetauschergehäuse kann in dieser Ausführung formschlüssig eingeklemmt sein und ist sicher zwischen Grundplatte und Filtergehäuse gehalten. Als weitere Verbindungsmöglichkeit kann die Grundplatte auch an das Wärmetauschergehäuse angelötet werden. Es ist aber auch möglich, Grundplatte und Wärmetauschergehäuse einteilig auszubilden, insbesondere als ein gemeinsames Gussteil.

Zwischen den Öffnungen im Filtergehäuse und den zugeordneten Kanälen im Wärmetauschergehäuse können Verbindungskanäle angeordnet sein, die insbesondere separat ausgebildet sind und zur Überbrückung zwischen zwei Anschlussstellen dienen.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Flüssigkeitsfilter-Wärmetauscher-Systems in Explosionsdarstellung,
- Fig. 2: das Flüssigkeitsfilter-Wärmetauscher-System in zusam- mengebauter Lage, teilweise im Schnitt.

In den Figuren sind gleiche Bauteile mit gleichen Bezugszeichen versehen.

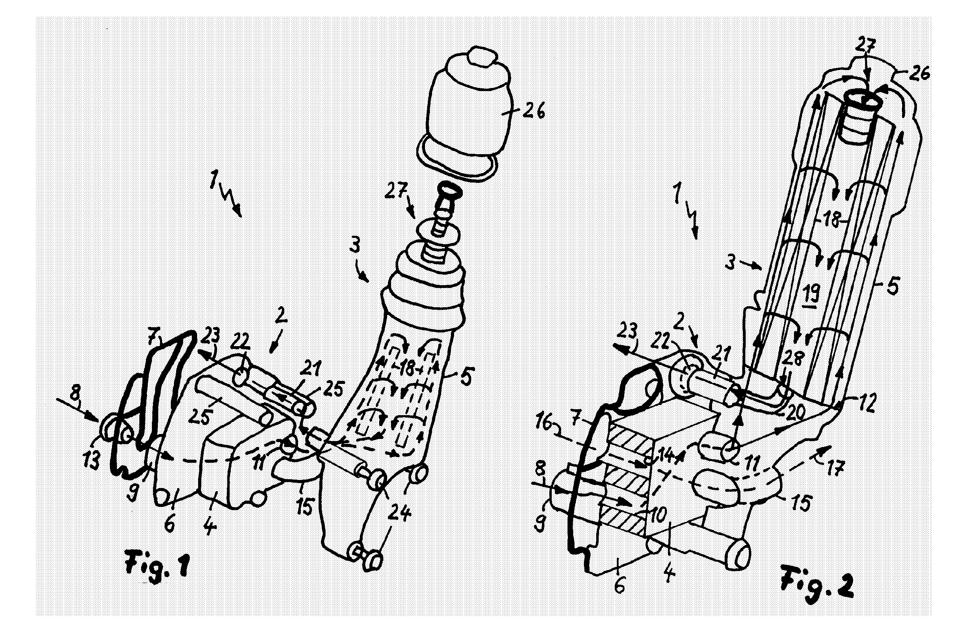

Bei dem in den Figuren 1 und 2 dargestellten Flüssigkeitsfilter-Wärmetauscher-System 1 handelt es sich zweckmäßig um ein Ölfilter-Ölkühler-System für ein Kraftfahrzeug. Im Rahmen der Erfindung kommt aber auch eine Anwendung für andere Flüssigkeiten in Betracht, ebenso kann es sich bei dem Wärmetauscher um eine allgemeine Einrichtung zur Temperierung handeln, also gegebenenfalls auch um eine Einrichtung zur Erwärmung der zu reinigenden Flüssigkeit.

Das Flüssigkeitsfilter-Wärmetauscher-System 1 ist zweiteilig aufgebaut und umfasst einen Wärmetauscher 2 in einem Wärmetauschergehäuse 4 sowie einen Flüssigkeitsfilter 3 in einem Filtergehäuse 5. Das Wärmetauschergehäuse 4 und das Filtergehäuse 5 sind miteinander verbunden. Des Weiteren ist eine Grundplatte 6 vorgesehen, welche auf der dem Filtergehäuse 5 abgewandten Seite mit dem Wärmetauschergehäuse 4 verbunden ist, insbesondere mit diesem verschraubt ist und/oder verlötet ist. Die Außenseite der Grundplatte 6 dient zur Anbindung des Flüssigkeitsfilter-Wärmetauscher-Systems 1 an ein weiteres Bauteil, insbesondere einem Bauteil eines Kraftfahrzeuges. Auf dieser außen liegenden Seite der Grundplatte 6 ist zweckmäßig ein Dichtungselement 7 vorgesehen, um eine flüssigkeitsdichte Verbindung zwischen dem Flüssigkeitsfilter-Wärmetauscher-System 1 und dem weiteren Bauteil zu schaffen.

Die zu reinigende Flüssigkeit wird über den Wärmetauscher 2 sowohl zugeführt als auch wieder abgeleitet. Die Zuführung erfolgt in Pfeilrichtung 8 über einen Eintrittsstutzen 9, welcher auf der dem Wärmetauscher 2 abgewandten Seite in der Grundplatte 6 vorgesehen ist und der die Grundplatte 6 durchragt und mit einem Kanalabschnitt 10 (Fig. 2) im Wärmetauscher 2 kommuniziert. Im Eintrittsstutzen 9 - auf den gegebenenfalls auch verzichtet werden kann - ist ein Rücklaufsperrventil 13 angeordnet, welches ein unerwünschtes Austreten der eingeleiteten Flüssigkeit verhindert. Nach dem Durchströmen des Wärmetauschers 2 verlässt die temperierte Flüssigkeit diesen über den Kanalabschnitt 10 und einen nachfolgenden Zulaufkanal 11, der auf der der Grundplatte 6 abgewandten Seite in das Wärmetauschergehäuse 4 eingebracht ist und der mit einer Eintrittsöffnung 12 im Filtergehäuse 5 kommuniziert.

Im Wärmetauscher 2 wird die eingeleitete Flüsigkeit mit Hilfe eines Temperiermittels, insbesondere eines Kühlmittels, temperiert. Wie Fig. 2 zu entnehmen, wird das Temperiermittel über einen Kanalabschnitt 14 in den Wärmetauscher 2 eingeleitet und über einen Auslassstutzen 15 aus diesem wieder abgeführt. Die Eintrittsöffnung des Kanalabschnitts 14, über den in Pfeilrichtung 16 das Temperiermittel eingeleitet wird, befindet sich auf der der Grundplatte 6 zugewandten Seite. Innerhalb des Wärmetauschergehäuses 4 wird der in Pfeilrichtung 8 eingeleitete Flüssigkeitsstrom der zu reinigenden Flüssigkeit in bekannter Weise von dem Temperiermittel gekühlt oder gegebenenfalls erwärmt. Nach der Temperierung wird das Temperiermittel in Pfeilrichtung 17 über den Auslassstutzen 15 wieder abgeleitet. Der Auslass bzw. Auslassstutzen kann sowohl auf der der Grundplatte zugewandten Seite als auch auf der der Grundplatte abgewandten Seite angeordnet werden.

Die Eintrittsöffnung 12 befindet sich am Boden des zylindrischen Filtergehäuses 5, in welchem ein zylindrisches Filterelement 18 aufgenommen ist, das radial von außen nach innen von der zu reinigenden Flüssigkeit durchströmt wird. Die radial außen liegende Seite entspricht der Rohseite des Filterelementes, die radial innen liegende Seite entspricht der Reinseite des Filterelementes, welche einen axialen Ablaufkanal 19 im Filtergehäuse 5 einschließt. Die gereinigte Flüssigkeit strömt nach dem Passieren des Filterelementes 18 axial über den zentrischen Ablaufkanal 19 zum Boden des Filtergehäuses und wird dort über eine Austrittsöffnung und einen Verbindungsabschnitt 20 zu einem als separates Bauteil ausgeführten Verbindungskanal 21 geleitet, der insbesondere elastomerbeschichtet ist und mit einer Ablauföffnung 22 in der Grundplatte 6 verbunden ist. Über die Ablauföffnung 22 kann die gereinigte Flüssigkeit das Flüssigkeitsfilter-Wärmetauscher-System 1 verlassen. Der Verbindungskanal 21 befindet sich außerhalb des Filtergehäuses 5 und ist dem Wärmetauscher 2 zuzuordnen; der Verbindungskanal 21 kann auch als Ablaufkanal im Wärmetauscher 2 bezeichnet werden.

Die Verbindung zwischen Wärmetauscher 2 und Flüssigkeitsfilter 3 erfolgt über Schrauben 24, die am Filtergehäuse 5 angesetzt sind und in Stützen 25 einzuführen sind, welche einteilig mit der Grundplatte 6 ausgeführt sind, bzw. unmittelbar mit dem Wärmetauschergehäuse 4 zu verschrauben sind. Die Stützen 25 an der Grundplatte 6 sind in Montageposition am Filtergehäuse 5 abgestützt, wobei das Wärmetauschergehäuse 4 zwischen der Grundplatte 6 und dem Filtergehäuse 5 liegt und zwischen diesen Bauteilen angeordnet ist. Die Grundplatte 6 besteht zweckmäßig aus einem Aluminium-Druckguss.

Das Filtergehäuse 5 ist von einem oberen, stirnseitigen Schraubdeckel 26 zu verschließen. Zum Austausch des Filterelements 18 kann der Schraubdeckel 26 gelöst und das Filterelement axial entnommen werden. Im Schraubdeckel 26 ist ein Filterumgehungsventil 27 aufgenommen, welches in die stirnseitige Öffnung des zylindrischen Filterelementes 18 eingesetzt ist und unter regulären Bedingungen ein Überströmen zwischen Roh- und Reinseite des Filterelementes verhindert, bei Erreichen eines Grenzdruckes jedoch öffnet und einen stirnseitigen Übertritt unter Umgehung des Materials des Filterelementes ermöglicht.

## Patentansprüche

1. Flüssigkeitsfilter-Wärmetauscher-System, insbesondere für Kraftfahrzeuge, mit einem Flüssigkeitsfilter (3), der ein Filtergehäuse (5) mit einem darin angeordneten Filterelement (18) aufweist, und mit einem Wärmetauscher (2) zur Temperierung der zu reinigenden Flüssigkeit, wobei die Flüssigkeit ausschließlich über den Wärmetauscher (2) in das Flüssigkeitsfilter-Wärmetauscher-System (1) einzuleiten bzw. aus dieser abzuführen und der Rohseite des Filterelements (18) über eine Eintrittsöffnung (12) vom Wärmetauscher (2) temperierte Flüssigkeit zuführbar und nach dem Durchströmen des Filterelements (18) die gereinigte Flüssigkeit über eine Austrittsöffnung (28) aus dem Flüssigkeitsfilter (3) abzuleiten ist,
**dadurch gekennzeichnet,**
**dass** der Wärmetauscher (2) ein vom Filtergehäuse (5) separat ausgebildetes, jedoch mit diesem zu verbindendes Wärmetauschergehäuse (4) aufweist, und dass die Eintrittsöffnung (12) im Filtergehäuse (5) mit einem Zulaufkanal (11) im Wärmetauscher (2) und die Austrittsöffnung (28) im Filtergehäuse (5) mit einem Ablaufkanal (21) im Wärmetauscher (2) kommuniziert, über den die temperierte und gereinigte Flüssigkeit aus dem Flüssigkeitsfilter-Wärmetauscher-System (1) ableitbar ist.

2. Flüssigkeitsfilter-Wärmetauscher-System nach Anspruch 1,
**dadurch gekennzeichnet,**
**dass** eine Seite des Wärmetauschergehäuses (4) mit einer Grundplatte (6) verbunden ist, über die das Flüssigkeitsfilter-Wärmetauscher-System (1) mit einem weiteren Bauteil zu verbinden ist.

3. Flüssigkeitsfilter-Wärmetauscher-System nach Anspruch 2,
**dadurch gekennzeichnet,**
**dass** die Grundplatte (6) mit dem Wärmetauschergehäuse (4) verlötet ist.

4. Flüssigkeitsfilter-Wärmetauscher-System nach Anspruch 2 oder 3,
**dadurch gekennzeichnet,**
**dass** die Grundplatte (6) aus Aluminium-Druckguss gefertigt ist.

5. Flüssigkeitsfilter-Wärmetauscher-System nach einem der Ansprüche 2 bis 4,
**dadurch gekennzeichnet,**
**dass** die Grundplatte (6) und das Filtergehäuse (5) auf gegenüberliegenden Seiten des Wärmetauschergehäuses (4) angeordnet sind.

6. Flüssigkeitsfilter-Wärmetauscher-System nach einem der Ansprüche 2 bis 5,
**dadurch gekennzeichnet,**
**dass** auf der dem Wärmetauschergehäuse (4) abgewandten Seite ein Dichtungselement (7) in der Grundplatte (6) aufgenommen ist.

7. Flüssigkeitsfilter-Wärmetauscher-System nach einem der Ansprüche 2 bis 6,
**dadurch gekennzeichnet,**
**dass** an der Grundplatte (6) Stützen (25) zur Abstützung am Filtergehäuse (5) vorgesehen sind.

8. Flüssigkeitsfilter-Wärmetauscher-System nach einem der Ansprüche 1 bis 7,
**dadurch gekennzeichnet,**
**dass** das zwischen der Austrittsöffnung (28) im Filtergehäuse (5) und einer Ablauföffnung (22) im Wärmetauscher (2) ein separat ausgeführter Verbindungskanal (21) angeordnet ist.

9. Verwendung des Flüssigkeitsfilter-Wärmetauscher-Systems (1) zur Ölfilterung und Ölkühlung in einem Kraftfahrzeug.
